# EUROPÄISCHE PATENTSCHRIFT

(11) **EP 3 617 042 B1**
(45) Veröffentlichungstag und Bekanntmachung des Hinweises auf die Patenterteilung: **30.03.2022**
(21) Anmeldenummer: 19185799.4
(22) Anmeldetag: 11.07.2019
(51) Int. Cl.: B62D 27/00, B62D 29/00, B23K 11/11, B32B 15/01, C23C 2/00

(54) **KRAFTFAHRZEUGSTRUKTURBAUTEIL**
VEHICLE STRUCTURAL COMPONENT
COMPOSANT STRUCTURAL DE VÉHICULE AUTOMOBILE

(30) Priorität: 03.08.2018 DE 102018213001
(43) Veröffentlichungstag der Anmeldung: 04.03.2020
(73) Patentinhaber: Ford Global Technologies, LLC, Dearborn, MI 48126 (US)
(72) Erfinder: Kreuzer, Bernhard, 51429 Bergisch Gladbach (DE); Timm, Frank, 51107 Köln (DE)
(74) Vertreter: Dörfler, Thomas

(56) Entgegenhaltungen:
- EP-A1- 1 582 283
- DE-A1- 3 222 766
- DE-A1-102012 013 882
- JP-A- 2010 122 203
- US-A1- 2016 046 330
- Hira AHLUWALIA: "Combating plate corrosion", the fabricator , 9. Oktober 2003 (2003-10-09), XP002797184, Gefunden im Internet: URL:https://www.thefabricator.com/thefabri cator/article/metalsmaterials/combating-pl ate-corrosion [gefunden am 2020-01-27]

## Beschreibung

Die Erfindung betrifft ein Kraftfahrzeugstrukturbauteil aus zwei flächig gegeneinander gerichteten Blechen, die durch Schweißpunkte miteinander verbunden sind, wobei mindestens eines der beiden Bleche auf der dem gegenüberliegenden Blech zugewandten Seite Erhebungen aufweist, sodass in den Bereichen zwischen den Schweißpunkten Spalte gebildet sind, und wobei in die Spalte korrosionsschützendes Beschichtungsmaterial eingebracht wird.

Bei Kraftfahrzeugstrukturbauteilen, die aus zwei teilweise gegeneinander anliegenden und miteinander verbundenen Blechen bestehen, treten häufig in den Spalten zwischen den Blechen Korrosionsschäden auf, die bis zur völligen Zerstörung des jeweiligen Strukturbauteils führen können.

Es sind in der Vergangenheit bereits erhebliche Anstrengungen unternommen worden, um derartigen Korrosionsschäden entgegenzuwirken.

Ein bekanntes Kraftfahrzeugstrukturbauteil der eingangs genannten Art (DE 10 2012 013 882 A1) besteht aus zwei gegeneinander anliegenden Blechen, die durch eine Vielzahl von Schweißpunkten miteinander verbunden sind. Zwischen den beiden Blechen verbleiben Spalte, in die als Korrosionsschutz eine Beschichtung eingebracht werden soll. Die Spalte weisen dabei eine Breite im Bereich von 0,2 mm bis 0,6 mm auf, während die Beschichtung, die in Form einer kathodischen Tauchlackierung in die Spalte eingebracht wird, eine Dicke von 10 bis 40 µm aufweist.

Eine komplette Beschichtung der Spalte zwischen den beiden durch Schweißpunkte miteinander verbundenen Blechen ist jedoch äußerst schwierig und in der Regel unvollkommen, da die Wege, die das Beschichtungsmaterial in den Spalten zwischen den Blechen zurücklegen muss, ziemlich lang sind. Darüber hinaus verhindern Lufteinschlüsse oder diverse anderweitige Hindernisse das Eindringen des Beschichtungsmaterials in die zum Teil engen Spalten. Folglich werden bei diesen bekannten Strukturbauteilen nicht die gesamten Spaltflächen zwischen den beiden Blechen durch das Beschichtungsmaterial abgedeckt, sodass verschiedene Bereiche der Spalte unbedeckt und somit ungeschützt bleiben, wodurch es trotz dieser Vorsichtsmaßnahmen zu Korrosion kommen kann.

Ferner ist aus der DE 32 22 766 A1 ein Kraftfahrzeugstrukturbauteil bekannt, bei dem zwei Konstruktionsteile bündig aneinander anliegen und durch Schweißpunkte miteinander verbunden sind. Die beiden miteinander verbundenen Konstruktionsteile sollen dabei im Bereich ihrer gemeinsamen Anlageflächen durch ein Behandlungsmittel korrosionsgeschützt werden. Das Behandlungsmittel gelangt dabei durch Kapillarwirkung in den Anlagebereich, wobei der Zugang zu den Anlageflächen über die Randbereiche und/oder eine Öffnung in einem der beiden Konstruktionsteile erfolgen kann. Ein vollständiger Korrosionsschutz ist bei dieser Konstruktion nicht möglich, da nicht gewährleistet ist, dass das Behandlungsmittel allein durch die Kapillarwirkung zu sämtlichen gemeinsamen Anlageflächen gelangt.

Der Erfindung liegt daher die Aufgabe zugrunde, die bekannten Kraftfahrzeugstrukturbauteile derart zu verbessern, dass zwischen den durch Schweißpunkte miteinander verbundenen Blechen in den vorhandenen Spalten keine Korrosion mehr auftreten kann.

Erfindungsgemäß wird diese Aufgabe dadurch gelöst, dass im Bereich der Spalte mindestens in einem der Bleche Löcher für den Zulauf des Beschichtungsmaterials und zur Entlüftung vorgesehen sind, dass die Erhebungen nahe den Löchern angeordnet sind und dass die Spalte komplett mit dem Beschichtungsmaterial ausgefüllt werden.

Durch das Anbringen dieser Löcher kann während des Beschichtungsvorgangs das Beschichtungsmaterial aufgrund der kurzen Wege und des leichten ungehinderten Zugangs bequem in die Spalte eindringen. Gleichzeitig kann die Luft aus den Spalten entweichen, sodass eine rasche und zuverlässige Beschichtung erzielt werden kann, wobei die Spalte komplett ausgefüllt werden und keine ungeschützten Bereiche in den Spalten verbleiben. Aufgrund der Tatsache, dass die Erhebungen nahe den Löchern angeordnet sind, wird dafür gesorgt, dass in den Bereich hinter den Löchern in jedem Fall ein definierter Spalt vorhanden ist, in den das Beschichtungsmaterial eindringen und die überschüssige Luft entweichen kann.

Mindestens eines der miteinander verbundenen Bleche oder auch beide Bleche bestehen vorzugsweise aus Mangan-Bor-Stahl bzw. Bor-Stahl, welches hochfest und leicht warm verformbar ist.

Die Bleche können mit einer ALSI-Beschichtung versehen sein, die aber ohne das zusätzliche korrosionsschützende Beschichtungsmaterial noch keinen ausreichenden Korrosionsschutz für die Bleche bietet.

Die Strukturbauteile werden in der Weise hergestellt, dass die Spalte vorzugsweise eine Breite von etwa 0,3 mm bis 0,7 mm aufweisen.

Mindestens eines der beiden Bleche weist auf der dem gegenüberliegenden Blech zugewandten Seite nahe den Zulauf- und Entlüftungslöchern Erhebungen auf, sodass dadurch die erzeugten Spalte definiert werden.

Diese Erhebungen können beispielsweise in das Blech eingeprägt werden.

Die Abstände zwischen den Schweißpunkten untereinander betragen vorzugsweise etwa 25 mm bis 40 mm.

Die Löcher können kreisrund sein, jedoch können Sie auch jede beliebige andere Kontur aufweisen. Dies eignet sich vor allem bei lasergeschnittenen Teilen, zum

Beispiel bei Boron-Teilen, die oft sowieso laserbeschnitten werden. Dabei sollten die Löcher so gestaltet sein, dass sie sowohl die Ablauffunktion gut erfüllen als auch die Festigkeit des Bauteils nicht oder nur unwesentlich reduzieren. Alternativ können die Löcher schon im Platinenschnitt gestanzt werden, wodurch sich nach dem Ziehvorgang eine Abweichung von der Kreisform ergeben kann.

Bevorzugt ist die maximale Weite der Löcher kleiner als 8 mm. Damit wird sichergestellt, dass auch die unregelmäßig geformten Löcher das Bauteil nicht zu sehr schwächen.

Die Größe der Löcher ist auf die Dicke der Bleche sowie auf die Viskosität des Beschichtungsmaterials abzustimmen. Für die üblichen Anwendungsbeispiele weisen die Löcher zweckmäßig einen Durchmesser von etwa 2 mm bis 7 mm auf.

Vorzugsweise sind die Löcher in demjenigen Blech ausgebildet, welches auf der zur Fahrzeuginnenseite gerichteten Seite liegt. Dadurch kann die Außenseite des Strukturteils glatt und verschlossen gehalten werden.

Als Beschichtungsmaterial kann eine an sich bekannte kathodische Tauchlackierung verwendet werden.

Die Erfindung ist in der Zeichnung beispielhaft dargestellt und im Einzelnen anhand der Zeichnung beschrieben. Es zeigen:
- Fig. 1:: die Ansicht eines Kraftfahrzeugstrukturbauteils,
- Fig. 2:: in vergrößertem Maßstab einen Schnitt entlang der Linie II-II aus Fig. 1,
- Fig. 3:: die Herstellung von Erhebungen an einem der Bleche durch Prägung und
- Fig. 4:: einen ähnlichen Schnitt wie Fig. 2 mit den vorhandenen Erhebungen.

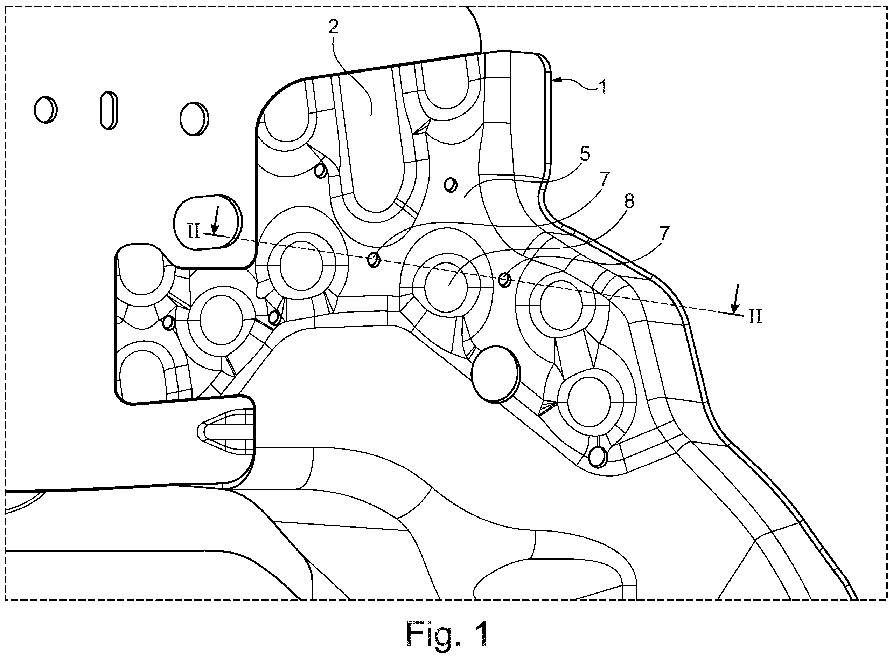

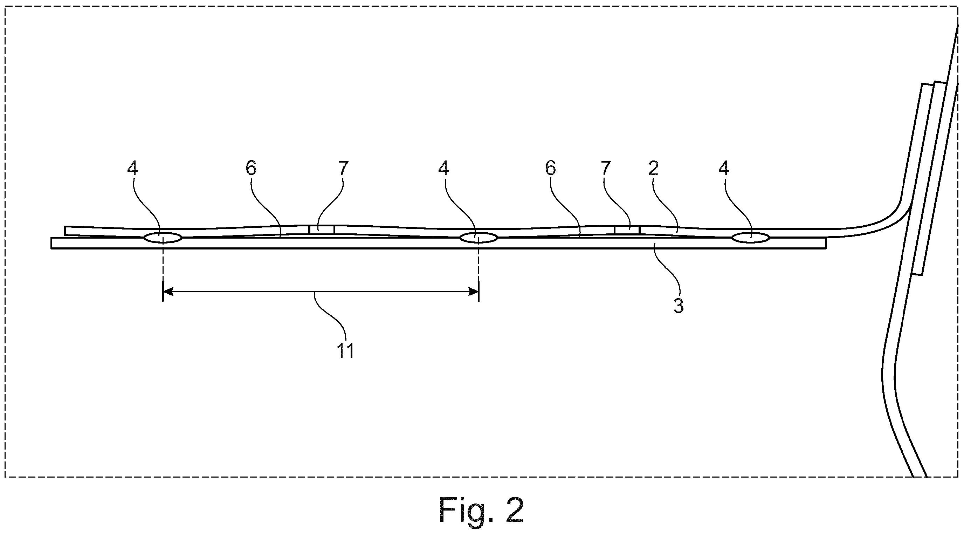

Die Figuren 1 und 2 zeigen ein erfindungsgemäßes Kraftfahrzeugstrukturbauteil 1, welches aus zwei flächig gegeneinander gerichteten Blechen 2 und 3 besteht. Die beiden Bleche 2 und 3 sind durch Schweißpunkte 4 miteinander verbunden.

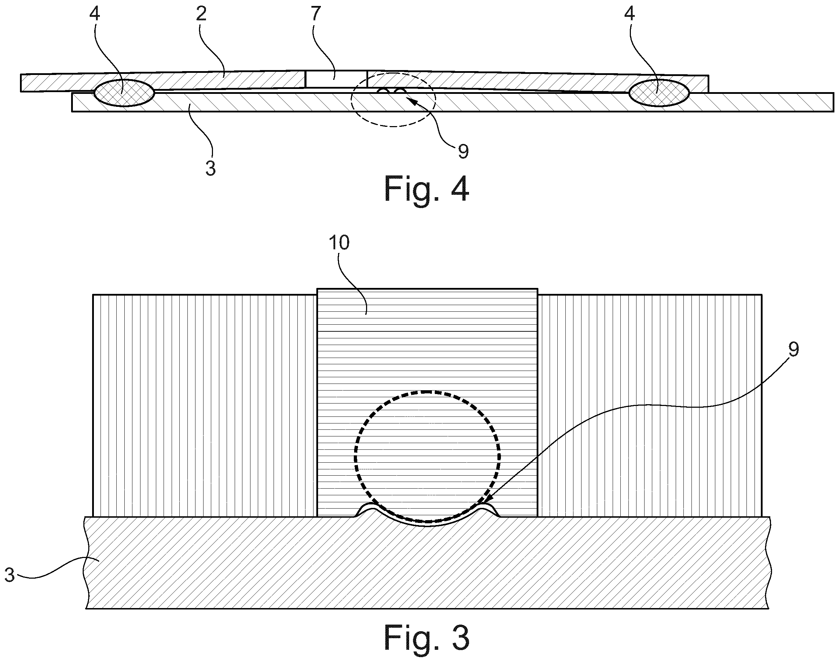

In den abgehobenen Bereichen 5 zwischen den Schweißpunkten 4 sind zwischen den beiden Blechen 2 und 3 Spalte 6 vorgesehen, die durch die Erfindung besser korrosionsgeschützt werden sollen. Die Spalte 6 werden dabei gezielt erzeugt und stabilisiert, wie später noch im Zusammenhang mit der vergrößerten Darstellung gemäß den Figuren 3 und 4 veranschaulicht und beschrieben wird.

Zu diesem Zweck sind in den Bereichen der Spalte 6 bei dem in der Zeichnung oberen Blech 2 Löcher 7 für den Zulauf von Beschichtungsmaterial in die Spalte 6 und zur Entlüftung der Spalte 6 vorgesehen. Die Löcher 7 sind dabei als runde Bohrungen ausgebildet, die einen Durchmesser von etwa 2 mm bis 7 mm aufweisen.

Die beiden Bleche 2 und 3 sind derart mit einander verbunden, dass die Spalte 6 eine Breite von etwa 0,3 mm bis 0,7 mm aufweisen, sodass das Eindringen des Beschichtungsmaterials in die Spalte 6 problemlos erfolgen kann.

Durch das Vorhandensein der Zulauf- und Entlüftungslöcher 7 kann das Beschichtungsmaterial im Hinblick auf die relativ kurzen Wege, die das Beschichtungsmaterial zwischen den Blechen 2 und 3 zurückzulegen hat, sowie aufgrund der durch die Löcher 7 entweichenden Lufteinschlüsse die Spalte 6 komplett ausfüllen, sodass keine ungeschützten Bereiche innerhalb der Spalte verbleiben.

Insbesondere beim Aufbringen des Beschichtungsmaterials durch kathodische Tauchlackierung kann das Beschichtungsmaterial somit problemlos bis in die engsten Winkel der Spalte 6 vordringen.

Wie aus Fig. 1 hervorgeht, kann beispielsweise das Blech 2, welches mit den Löchern 7 versehen ist, mit Eindrückungen 8 für die Schweißpunkte 4 versehen sein.

Die Abstände 11 der Schweißpunkte 4 betragen etwa 25 mm bis 40 mm, sodass es keine Schwierigkeiten bereitet, beispielsweise bei einer Elektrotauchlackierung die Spalte 6 komplett zu füllen, da die Abstände von den Löchern 7 bis zu den Bereichen der Schweißpunkte 4 relativ kurz sind.

Das Kraftfahrzeugstrukturbauteil 1 welches aus den beiden Blechen 2 und 3 zusammengesetzt ist, ist so konstruiert, dass die Löcher 7 in dem Blech 2 angeordnet sind, welches zur Fahrzeuginnenseite gerichtet ist, sodass das Strukturbauteil 1 nach außen hin verschlossen ist.

Wie in den Figuren 3 und 4 veranschaulicht, weist das in der Zeichnung untere Blech 3 seitlich von dem Loch 7 Erhebungen 9 auf, um den jeweiligen Spalt 6 im Bereich der Löcher 7 offenzuhalten, sodass dadurch eine Mindestbreite des Spaltes 6 garantiert ist und das Beschichtungsmaterial bequem in den jeweiligen Spalt 6 eindringen kann.

Ferner können, wie in Fig. 3 zu erkennen ist, die Erhebungen 9 mit Hilfe eines Prägewerkzeugs 10 in das Blech 3 eingeformt werden.

Mindestens eines der Bleche 2 und 3 besteht in der Regel aus Mangan-Bor-Stahl oder Bor-Stahl, welches eine hohe Festigkeit aufweist und sich gut verformen lässt. Die Bleche 2 und 3 können dabei mit einer ALSI-Beschichtung versehen sein.

### Bezugszeichenliste

- 1: Kraftfahrzeugstrukturbauteil
- 2: Blech
- 3: Blech
- 4: Schweißpunkte
- 5: abgehobener Bereich
- 6: Spalte
- 7: Löcher
- 8: Eindrückungen
- 9: Erhebungen
- 10: Prägewerkzeug
- 11: Abstand der Schweißpunkte 4

## Patentansprüche

1. Kraftfahrzeugstrukturbauteil (1) aus zwei flächig gegeneinander gerichteten Blechen (2, 3), die durch Schweißpunkte (4) miteinander verbunden sind, wobei mindestens eines der beiden Bleche (2, 3) auf der dem gegenüberliegenden Blech zugewandten Seite Erhebungen (9) aufweist, sodass in den Bereichen zwischen den Schweißpunkten (4) Spalte (6) gebildet sind, und wobei in die Spalte (6) korrosionsschützendes Beschichtungsmaterial eingebracht wird, **dadurch gekennzeichnet,**
**dass** im Bereich der Spalte (6) mindestens in einem der Bleche (2, 3) Löcher (7) für den Zulauf des Beschichtungsmaterials und zur Entlüftung vorgesehen sind,
**dass** die Erhebungen (9) nahe den Löchern (7) angeordnet sind und dass die Spalte (6) komplett mit dem Beschichtungsmaterial ausgefüllt werden.

2. Kraftfahrzeugstrukturbauteil nach Anspruch 1,
**dadurch gekennzeichnet,**
**dass** mindestens eines der Bleche (2, 3) oder auch beide Bleche aus Mangan-Bor-Stahl bzw. Bor-Stahl bestehen.

3. Kraftfahrzeugstrukturbauteil nach Anspruch 2,
**dadurch gekennzeichnet,**
**dass** die aus Mangan-Bor-Stahl bzw. Bor-Stahl bestehenden Bleche (2, 3) eine ALSI-Beschichtung aufweisen.

4. Kraftfahrzeugstrukturbauteil nach einem der Ansprüche 1 bis 3, **dadurch gekennzeichnet,**
**dass** die Erhebungen (9) in das Blech (2; 3) geprägt sind.

5. Kraftfahrzeugstrukturbauteil nach einem der Ansprüche 1 bis 4, **dadurch gekennzeichnet,**
**dass** die Spalte (6) eine Breite von ca. 0,3 mm bis 0,7 mm aufweisen.

6. Kraftfahrzeugstrukturbauteil nach einem der Ansprüche 1 bis 5, **dadurch gekennzeichnet,**
**dass** die Abstände (11) der Schweißpunkte (4) untereinander etwa 25 mm bis 40 mm betragen.

7. Kraftfahrzeugstrukturbauteil nach einem der Ansprüche 1 bis 6, **dadurch gekennzeichnet,**
**dass** die Löcher (7) eine beliebige Kontur aufweisen.

8. Kraftfahrzeugstrukturbauteil nach Anspruch 7,
**dadurch gekennzeichnet,**
**dass** die maximale Weite der Löcher kleiner als 8 mm ist.

9. Kraftfahrzeugstrukturbauteil nach Anspruch 8,
**dadurch gekennzeichnet,**
**dass** die Löcher (7) einen Durchmesser von ca. 2 mm bis 7 mm aufweisen.

10. Kraftfahrzeugstrukturbauteil nach einem der Ansprüche 1 bis 9, **dadurch gekennzeichnet,**
**dass** die Löcher (7) in demjenigen Blech (2) angeordnet sind, welches zur Fahrzeuginnenseite gerichtet ist.

11. Kraftfahrzeugstrukturbauteil nach einem der Ansprüche 1 bis 10, **dadurch gekennzeichnet,**
**dass** das Beschichtungsmaterial eine kathodische Tauchlackierung ist.

## Claims

1. Motor vehicle structural component (1) composed of two metal sheets (2, 3) which are directed flatly against each other and which are connected to one another by weld points (4), wherein at least one of the two metal sheets (2, 3) has elevations (9) on the side facing towards the opposite metal sheet, with the result that gaps (6) are formed in the regions between the weld points (4), and wherein corrosion-protecting coating material is introduced into the gaps (6),
**characterized**
**in that** holes (7) for the inflow of the coating material and for ventilation are provided in the region of the gaps (6) at least in one of the metal sheets (2, 3),
**in that** the elevations (9) are arranged near the holes (7), and
**in that** the gaps (6) are completely filled with the coating material.

2. Motor vehicle structural component according to Claim 1,
**characterized**
**in that** at least one of the metal sheets (2, 3) or both of the metal sheets are composed of manganese-boron steel or boron steel.

3. Motor vehicle structural component according to Claim 2,
**characterized**
**in that** the metal sheets (2, 3) composed of manganese-boron steel or boron steel have an ALSI coating.

4. Motor vehicle structural component according to one of Claims 1 to 3,
**characterized**
**in that** the elevations (9) are embossed in the metal sheet (2; 3).

5. Motor vehicle structural component according to one of Claims 1 to 4,
**characterized**
**in that** the gaps (6) have a width of about 0.3 mm to 0.7 mm.

6. Motor vehicle structural component according to one of Claims 1 to 5,
**characterized**
**in that** the spacings (11) between the weld points (4) are approximately 25 mm to 40 mm.

7. Motor vehicle structural component according to one of Claims 1 to 6,
**characterized**
**in that** the holes (7) have any desired contour.

8. Motor vehicle structural component according to Claim 7,
**characterized**
**in that** the maximum width of the holes is less than 8 mm.

9. Motor vehicle structural component according to Claim 8,
**characterized**
**in that** the holes (7) have a diameter of about 2 mm to 7 mm.

10. Motor vehicle structural component according to one of Claims 1 to 9,
**characterized**
**in that** the holes (7) are arranged in the metal sheet (2) which is directed towards the inner side of the vehicle.

11. Motor vehicle structural component according to one of Claims 1 to 10,
**characterized**
**in that** the coating material is a cathodic dip coating.

## Revendications

1. Composant structural de véhicule automobile (1) composé de deux tôles (2, 3) orientées à plat l'une contre l'autre, qui sont reliées entre elles par des points de soudure (4), au moins l'une des deux tôles (2, 3) présentant des reliefs (9) sur le côté tourné vers la tôle opposée, de telle sorte que des fentes (6) sont formées dans les zones entre les points de soudure (4), et un matériau de revêtement anticorrosif étant introduit dans les fentes (6),
**caractérisé en ce que**
dans la zone des fentes (6), des perforations (7) sont prévues au moins dans l'une des tôles (2, 3) pour l'amenée du matériau de revêtement et pour l'évacuation de l'air, **en ce que** les reliefs (9) sont agencés à proximité des perforations (7), et
**en ce que** les fentes (6) sont complètement remplies avec le matériau de revêtement.

2. Composant structural de véhicule automobile selon la revendication 1, **caractérisé en ce qu'**au moins l'une des tôles (2, 3) ou les deux tôles sont constituées d'acier au manganèse-bore ou d'acier au bore.

3. Composant structural de véhicule automobile selon la revendication 2, **caractérisé en ce que** les tôles (2, 3) constituées d'acier au manganèse-bore ou d'acier au bore présentent un revêtement ALSI.

4. Composant structural de véhicule automobile selon l'une quelconque des revendications 1 à 3, **caractérisé en ce que** les reliefs (9) sont estampés dans la tôle (2 ; 3) .

5. Composant structural de véhicule automobile selon l'une quelconque des revendications 1 à 4, **caractérisé en ce que** les fentes (6) présentent une largeur d'environ 0,3 mm à 0,7 mm.

6. Composant structural de véhicule automobile selon l'une quelconque des revendications 1 à 5, **caractérisé en ce que** les distances (11) entre les points de soudure (4) sont d'environ 25 mm à 40 mm.

7. Composant structural de véhicule automobile selon l'une quelconque des revendications 1 à 6, **caractérisé en ce que** les perforations (7) présentent un contour quelconque.

8. Composant structural de véhicule automobile selon la revendication 7, **caractérisé en ce que** la largeur maximale des perforations est inférieure à 8 mm.

9. Composant structural de véhicule automobile selon la revendication 8, **caractérisé en ce que** les perforations (7) présentent un diamètre d'environ 2 mm à 7 mm.

10. Composant structural de véhicule automobile selon l'une quelconque des revendications 1 à 9, **caractérisé en ce que** les perforations (7) sont agencées dans la tôle (2) qui est orientée vers le côté intérieur du véhicule.

11. Composant structural de véhicule automobile selon l'une quelconque des revendications 1 à 10, **caractérisé en ce que** le matériau de revêtement est un vernissage par électrodéposition cathodique.
